Europäisches Patentamt

European Patent Office

Office européen des brevets

(19)

(11) Veröffentlichungsnummer: **0 299 960 B1**

(12) **EUROPÄISCHE PATENTSCHRIFT**

(45) Veröffentlichungstag der Patentschrift:
28.08.91 Patentblatt 91/35

(21) Anmeldenummer: 87902081.6

(22) Anmeldetag: 25.03.87

(86) Internationale Anmeldenummer:
PCT/EP87/00166

(87) Internationale Veröffentlichungsnummer:
WO 87/05868 08.10.87 Gazette 87/22

(51) Int. Cl.$^5$: **B60T 8/00**

## (54) VERFAHREN ZUR ANTIBLOCKIERREGELUNG.

(30) Priorität: 26.03.86 DE 3610281
30.04.86 DE 3614770

(43) Veröffentlichungstag der Anmeldung:
25.01.89 Patentblatt 89/04

(45) Bekanntmachung des Hinweises auf die
Patenterteilung:
28.08.91 Patentblatt 91/35

(84) Benannte Vertragsstaaten:
AT DE FR GB IT SE

(56) Entgegenhaltungen:
AU-A-10 895 /70
US-A- 4 068 903

(73) Patentinhaber: ROBERT BOSCH GMBH
Postfach 50
W-7000 Stuttgart 1 (DE)

(72) Erfinder: BRASCHEL, Volker
Goethestrasse 1
W-7100 Heilbronn (DE)
Erfinder: SEITZ, Dieter
In der Aue 18
W-7141 Schwieberdingen (DE)
Erfinder: SCHÄFER, Jochen
Belchenweg 18
W-7140 Ludwigsburg 11 (DE)

(74) Vertreter: Kammer, Arno
Postfach 10 56 08 Grenzhöfer Weg 36
W-6900 Heidelberg 1 (DE)

## Beschreibung

Für die Erkennung von Instabilitäten der Räder bei ABS-Regelungen werden bei bekannten Antiblockierreglern feste oder variable Schlupf- und Beschleunigungsschwellen (negativ) überwacht. Abhängig von verwendeten Regelalgorithmus wird bei Überschreitung von einer oder von beiden Schwellen der Bremsdruck konstant gehalten oder abgesenkt.

Aus dem Dokument AU-A-10.895/70 ist ein Antiblockierregelsystem bekannt, bei dem neben der Radgeschwindigkeit die Fahrzeugverzögerung gemessen wird. Aus der Radgeschwindigkeit bei Bremsbeginn und der integrierten Fahrzeugverzögerung wird dann ein Fahrzeuggeschwindigkeitssignal gebildet, mit dem das Radgeschwindigkeitssignal verglichen wird. Die Abweichung dieser Signale voneinander wird mit einem Schwellwert verglichen, durch dessen Überschreiten der Bremsdruck abgebaut wird.

Demgegenüber werden bei dem erfindungsgemäßen Antiblockierregelsystem Radverzögerung und Schlupf über eine bestimmte Zeit oder solange ein bestimmtes Kriterium (geringer Schlupf) erfüllt ist, aufintegriert und beide Integrationsergebnisse gemeinsam bewertet. Die Integration erfolgt kontinuierlich, d.h. wenn über eine bestimmte Zeit integriert wird, wird das Zeitfenster bei jedem Rechenschritt immer weiter verschoben. Wird ein vorgegebener Grenzwert durch die gemeinsame Bewertung von Schlupf und Verzögerung überschritten, wobei der Grenzwert in vorteilhafter Weise von der Fahrzeugverzögerung und/oder der Fahrzeuggeschwindigkeit beeinflußt wird, so wird ein Druckabsenkimpuls für das entsprechende Rad erzeugt. Gleichzeitig werden die Integrationsergebnisse für Schlupf und Verzögerung jetzt ganz oder teilweise gelöscht. Erst wenn der Grenzwert erneut überschritten wird, erfolgt wieder eine Druckabsenkung.

Bei digitaler Auswertung werden die Radumfangsbeschleunigung und der Schlupf kontinuierlich errechnet. Man erhält quasianaloge Signale (Rasterung z. B. 1% und 0,1 g).

Die Integrationsergebnisse für Schlupf und Verzögerung werden nun — evt. unterschiedlich gewichtet — addiert. Das Ergebnis ist ein Maß für die Instabilität und wird für die Entscheidung, ob der Druck konstant gehalten oder abgesenkt wird, ausgewertet.

Das Verfahren der kontinuierlichen Auswertung von Schlupf und Beschleunigung kann auch während der Hochlaufphase des Rades nach einer Druckabsenkung vorteilhaft angewandt werde. Dabei werden die Zahlenwerte für Schlupf und Beschleunigung voneinander subtrahiert. Hier kann wieder eine unterschiedliche Gewichtung erfolgen. Das Ergebnis zeigt an, ob die Wiederbeschleunigung des Rades bereits so hohe Werte angenommen hat, daß, unter Berücksichtigung des noch vorhandenen Schlupfs, bereits wieder mit einer Drucksteigerung begonnen werden kann, ohne daß man Gefahr läuft, das Rad sofort wieder in hohen Schlupf zu zwingen.

Durch die Verringerung oder das Löschen der Integrationsinhalte ergeben sich automatisch die Pausen zwischen zwei Druckpulsen (hohe Verzögerung und hoher Schlupf z. B. ergeben kurze Pausen zwischen zwei Abbaupulsen und auch z. B. hohe Wiederbeschleunigung und kleiner Schlupf ergeben kurze Pausen zwischen zwei Aufbaupulsen usw). Durch die Abhängigkeit des überwachten Grenzwertes von der Fahrzeugverzögerung sind während der Instabilitätsphasen die Pausen auf hohem $\mu$ (kurze Abbauzeiten erwünscht) lang und auf nie-derem $\mu$ (teilweisegeschlossenes Druckabbausignal erforderlich) kurz bzw. nicht vorhanden. Läuft ein Rad nur mit geringem Bremsmomentüberschuß in das instabile Gebiet der $\mu$-Schlupf-Kurve ein, wird dies frühzeitig erkannt.

Treten bei dem erfindungsgemäßen Verfahren durch Störungen nur kurzzeitig unzulässig hohe Beschleunigungen auf oder kommt es zu kleinen Geschwindigkeitsabweichungen (Schlupf), so führt dies nicht unmittelbar zum Einsetzen einer ABS-Regelung. Bei den bisher bekannten Regelalgorithmen wird zur Filterung solcher Störungen meist verlangt, daß im ersten Regelzyklus eine vorgegebene Beschleunigungs- und gleichzeitig eine vorgegebene Schlupfschwelle erreicht sein müssen, ehe ein Druckabbau möglich ist. Diese erhöhte Filterung führt im ersten Regelzyklus zu einer erhöhten Regelabweichung. Bei dem vorgeschlagenen Verfahren werden Schlupf und Beschleuigung gleichzeitig bewertet. Eine echte Instabiität wird sowohl im ersten als auch bei allen weiteren Regelzyklen eher erkannt. So führen bereits geringe Verzögerungszunahmen zu einer Druckabsenkung, wenn sich das Rad bereits in einem deutlichen Schlupf befindet.

Während der Wiederbeschleunigungsphase nach einer Druckabsenkung kann erkannt werden, ob bei einem gegebenen Verhältnis von Wiederbeschleunigung und Schlupf das Rad auch dann in den stabilen Bereich der $\mu$-Schlupf-Kurve zurückkehren kann, wenn bereits im instabilen Bereich wieder mit der Drucksteigerung begonnen wird. Ein zu "hartes" Einlaufen in den stabilen Bereich mit Komforteinbußen wird verhindert und die Abbremsung verbessert.

Anhand des Ausführungsbeispiels der Zeichnung wird die Erfindung näher erläutert.

Es zeigen :

Fig. 1      die prinzipielle Darstellung eines Antiblockierregelsystems

2

Fig. 2        ein Blockschaltbild zur Erläuterung der Erfindung
Fig. 3-6      Diagramme zur Erläuterung der Wirkungsweise

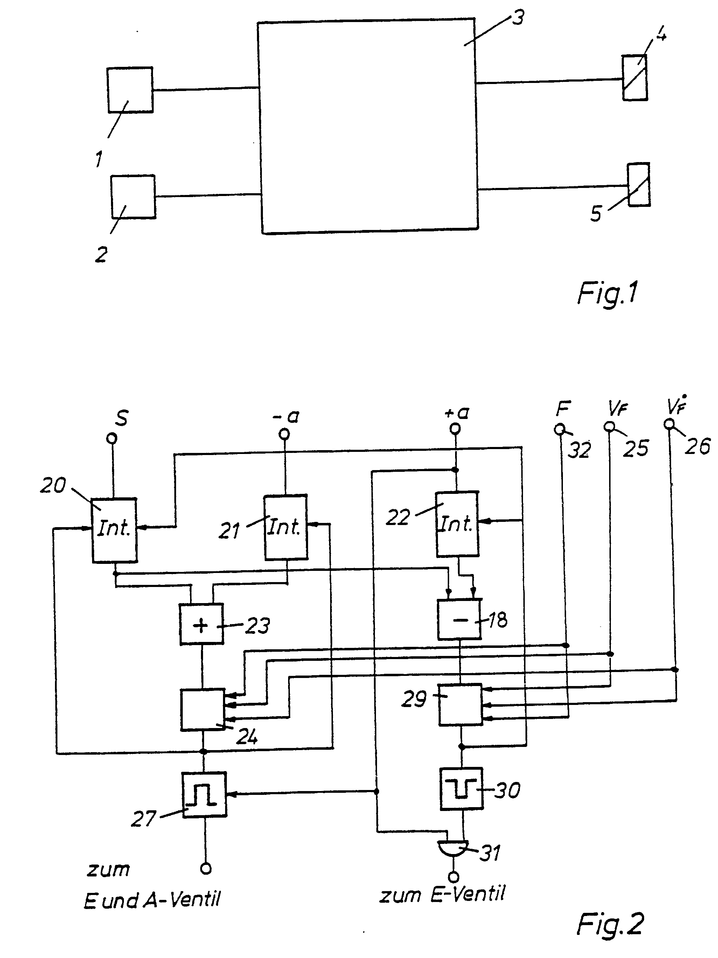

In Fig. 1 sind mit 1 und 2 Meßwertgeber zur Messung der Geschwindigkeit zweier Räder bezeichnet. Deren Signale werden einer Auswerteschaltung 3 zugeführt, die aus den zugeführten Radgeschwindigkeitssignalen der Radverzögerung, dem Radschlupf und der Radbeschleunigung entsprechende Signale erzeugt. Aus diesen Signalen werden dann Bremsdrucksteuersignale gebildet, die den Rädern zugeordnete Magnetventilanordnungen 4 und 5 zugeführt werden. Beispielsweise besteht jede der Magnetventilanordnungen 4 und 5 aus der Kombination eines Einlaß- und eines Auslaßventils.

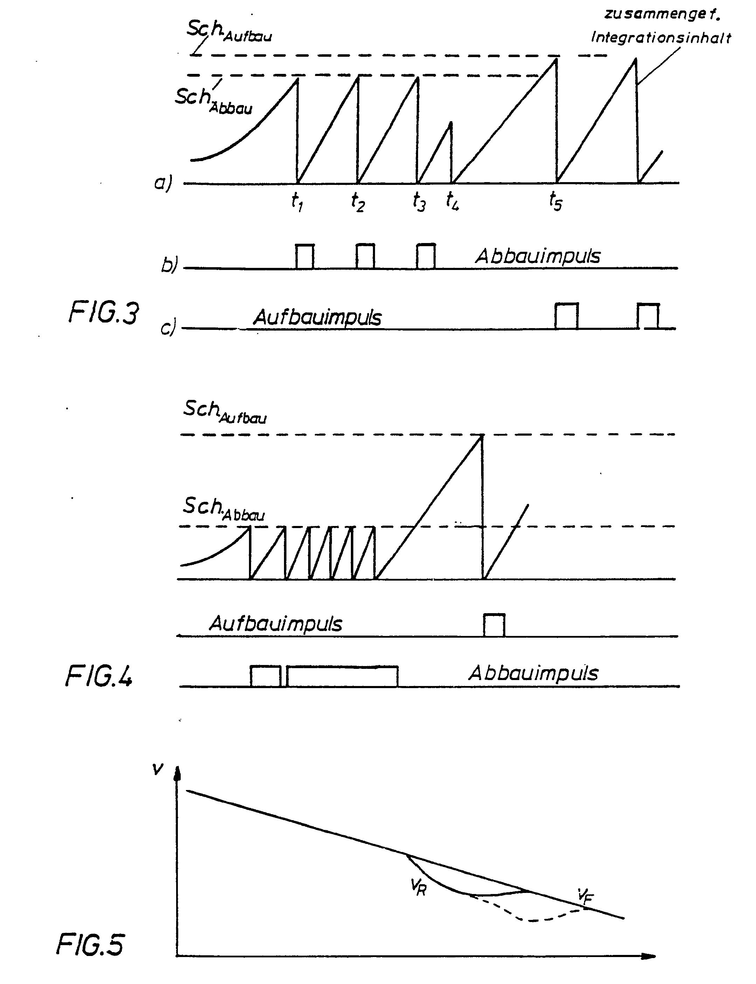

Das Blockschaltbild der Fig. 2 ist Teil der Auswerteschaltung 3 der Fig. 1. Es weist drei Integratoren 20, 21 und 22 auf, denen die dem Schlupf, der Radverzögerung und der Radbeschleunigung entsprechenden Signale s, −a und +a an ihren Eingangsklemmen zugeführt werden. Die Integratoren sind so ausgelegt, daß sie eine vorgegebene Zahl von nacheinander ermittelten Werten abspeichern und aufaddieren. Trifft ein neuer Wert ein, so wird der älteste Wert gelöscht und der neue Summenwert gebildet.

Im linken Teil des Blockschaltbilds der Fig. 2 wird der integrierte Schlupfwert mit dem integrierten Verzögerungswert in einem Addierglied 23 verknüpft. Der sich daraus ergebende Summenwert wird einer Schwellenwertstufe 24 zugeführt, deren Schwelle (Grenzwert) von der Fahrzeuggeschwindigkeit $V_F$ und/oder der Fahrzeugverzögerung $V_F$ abhängig gemacht werden kann. Die Fahrzeuggeschwindigkeit kann z.B. eine Referenzgeschwindigkeit sein, die in bekannter Weise aus den Radgeschwindigkeiten unter Verwendung von vorgegebenen negativen Steigungen abgeleitet wird. Aus der Steigung dieser Referenzgeschwindigkeit oder durch einen Fahrzeugbeschleunigungsgeber kann man ein der Fahrzeugverzögerung entsprechendes Signal erhalten. Die Signale $V_F$ und $V_F$ werden über die Klemmen 25 und 26 der Schwellenwertstufe 24 zur Variation der Schwellen zugeführt, wobei mit kleiner werdender Fahrzeuggeschwindigkeit die Schwelle tiefer gelegt wird und mit kleiner werdender Fahrzeugverzögerung ebenfalls die Schwelle tiefer gelegt wird. Die Schwelle kann zusätzlich noch durch ein z. B. die Welligkeit der Fahrbahn repräsentierendes Signal F (Klemme 32) beeinflußt werden. Dabei wird die Schwelle höher gelegt, wenn der Wert von F ansteigt. Wird die Schwelle durch das Summensignal überschritten, so wird in der Stufe 27 ein Impuls erzeugt, der zum Einlaß- und Auslaßventil gegeben wird und damit einen Druckabbau auslöst. Das Ausgangsventil der Schwellwertstufe 24 löscht gleichzeitig die in den Integratoren gespeicherten Schlupf- und Verzögerungswerte ganz oder wenigstens zum Teil, so daß häufig erst nach einer Reihe von Messungen die Schwelle wieder erreicht werden kann.

Wie bereits erwähnt, wird auch die Radbeschleunigung +a in gleicher Weise wie die Verzögerung −a im Integrator 22 integiert. In einer Subtrahierstufe 28 wird nun die Differenz des integrierten Schlupfwerts und des integtrierten Beschleunigungswerts gebildet. Die Differenz wird einer weireten Schwellwertstufe 29 zugeführt, deren Schwellen ebenfalls von der Fahrzeugverzögerung und von der Fahrzeuggeschwindigkeit abhängig sein können, wobei hier mit höher werdender Fahrzeugverzögerung die Schwelle abgesenkt und mit größer werdender Fahrzeuggeschwindigkeit die Schwelle ebenfalls abgesenkt wird. Auch das Signal F sorgt dafür, daß die Schwelle tiefer gelegt wird.

Das bei Überschreiten der Schwelle auftretende Ausgangssignal löscht wieder den Inhalt der Integratoren 20 und 22 ganz oder teilweise und bewirkt ausserdem, daß eine Stufe 30 sein Ausgangssignal kurzzeitig unterbricht und, das geschlossene Einlabventil kurzzeitig öffnet und somit einen Druckaufbau bewirkt. Das Einlaßventil wird durch das Signal der Stufe 30 normalerweise geschlossen gehalten, wenn das Und-Gatter 31 durchlässig ist. Dies ist der Fall, wenn eine Beschleunigung +a auftritt. Dieses Auftreten eines +a- Signals sperrt auch gleichzeitig die Stufe 27. Es bewirkt also eine Umschaltung der Schaltungsanordnung.

Fig. 3 der Zeichnung zeigt beispielhaft den Verlauf der zusammengefaßten Integrationsinhalte und die zugehörigen Schwellen (Fig. 3a) und die erzeugten Druckänderungsimpulse und zwar für den Abbau (Fig. 3b) und für den Aufbau (Fig. 3c). Es ist hier ein hohes µ unterstellt, wodurch sich eine entsprechende Lage der Schwellen ergibt. Bei $t_1$ erreichen die Zusammengefaßbten Integrationsergebnisse des Schlupfs und der Verzögerung zum ersten mal den Schwellwert $Sch_{Abbau}$; es wird ein Abbauimpuls vorgegebener Länge erzeugt und die Integration von neuem begonnen. Je schneller der Schwellenwert wieder erreicht wird, um so schmaler werden die Pausen zwischen den Impulsen und damit die Konstanthaltephasen zwischen den Abbauphasen.

Bei $t_4$ wird gelöscht und auf einem anderen Schwellwert umgeschaltet, weil die Radverzögerung in eine Radbeschleunigung übergeht. Beim Erreichen der Schwelle $Sch_{Aufbau}$ ($t_5$) wird ein Druckaufbauimpuls erzeugt. Auch hier hängt der Abstand zwischen zwei Druckaufbauimpulsen davon ab, wie schnell nach der Entladung die Schwelle $Sch_{Aufbau}$ wieder erreicht wird.

In Fig. 4 ist niedriges µ unterstellt, weshalb die schwellen anders liegen. Hier wird im Druckabbaubereich so schnell jeweils die Druckabbauschwelle wieder erreicht, daß sich teilweise die Druckabbauimpulse ohne Pausen aneinanderreihen (Dauersignal). Wegen des niedrigen µ und der dadurch geringen Radbeschleunigung wird nach Erreichen der Radbeschleunigungsphase erst nach einer relativ langen Zeit die Schwelle Sch$_{Aufbau}$ erreicht und ein Druckaufbauimpuls ausgelöst.

Die unterschiedliche Wirkungsweise der Regelung gemäß dem Stand der Technik und der Erfindung zeigt Fig. 5, wo ausgezogen der Radgeschwindigkeitsverlauf V$_R$ bei der erfindungsgemäßen Regelung und gestrichelt der bei Regelung gemäß dem Stand der Technik aufgezeichnet ist.

## Patentansprüche

1. Antiblockierregelsystem, bei dem die Radverzögerung und der Radschlupf eines Fahrzeugrads ermittelt und beide Größen zur Beeinflussung des Bremsdrucks ausgenutzt werden, dadurch gekennzeichnet, daß die Radverzögerung und der Radschlupf jeweils durch ein mitgeführtes Zeitfenster eine vorgegebene Zeit oder solange das Kriterium geringe Abweichung zwischen Referenzgeschwindigkeit und Radumfangsgeschwindigkeit, die jedoch alleine noch nicht für einen Druckabbau ausreicht, erfüllt ist, integriert werden, daß die beiden Integrationsergebnisse -gegebenenfalls mit vorgegebener Gewichtung- zusammengefaßt werden, daß bei Überschreiten eines Grenzwerts durch diese zusammengefaßten Ergebnisse Druckabbauimpulse erzeugt werden, wobei mit Erzeugung eines Druckabbauimpulses die Integrationsergebnisse wenigstens teilweise gelöscht werden.

2. Antiblockierregelsystem nach Anspruch 1, dadurch gekennzeichnet, daß die Radbeschleunigung und der Radschlupf jeweils durch ein mitgeführtes Zeitfenster über eine vorgegebene Zeit integriert werden, daß die beiden Integrationsergebnisse — gegebenenfalls mit vorgegebener Gewichtungzusammengefaßt werden, daß bei Überschreiten eines Grenzwerts durch diese zusammengefaßten Ergebnisse Druckaufbauimpulse erzeugt werden, wobei mit Erzeugung eines Druckaufbauimpulses die Integrationsergebnisse wenigstens teilweise gelöscht werden.

3. Antiblockierregelsystem nach Anspruch 1 oder 2, dadurch gekennzeichnet, daß der Grenzwert in Abhängigkeit von der Fahrzeugverzögerung und/oder der Fahrzeuggeschwindigkeit beeinflußt wird.

## Claims

1. Automatic anti-skid system, in which the wheel deceleration and the wheel slip of a vehicle wheel are determined and both variables are used for influencing the brake pressure, characterised in that the wheel deceleration and the wheel slip are in each case integrated for a predetermined time by means of an accompanying tire window or for as long as the criterion of a small deviation between the reference speed and the wheel circumferential speed — which is, however, on its own not yet sufficient for a pressure reduction — is fulfilled, in that the two integration results are combined — if required with predetermined weighting —, in that when a limit value is exceeded by these combined results pressure reduction pulses are produced, the integration results being at least partially erased with the production of a pressure reduction pulse.

2. Automatic anti-skid system according to Claim 1, characterised in that the wheel acceleration and the wheel slip are in each case integrated for a predetermined time by means of an accompanying time window, in that the two integration results are combined — if required with predetermined weighting —, in that when a limit value is exceeded by these combined results pressure build-up pulses are produced, the integration results being at least partially erased with the production of a pressure build-up pulse.

3. Automatic anti-skid system according to Claim 1 or 2, characterised in that the limit value is influenced as a function of the vehicle deceleration and/or the vehicle speed.

## Revendications

1. Système de régulation anti-blocage selon lequel on détermine la décélération et le glissement d'une roue du véhicule et on utilise ces deux grandeurs pour influencer la pression de freinage, système caractérisé en ce qu'on intègre la décélération de roue et le glissement de roue chaque fois dans une fenêtre de temps, déplacée et ayant une durée prédéterminée ou aussi longtemps que le critère d'une faible différence entre la vitesse de référence et la vitesse périphérique de roue est satisfait, différence qui seule n'est pas encore suffisante pour une diminution de la pression, et on réunit les deux résultats de l'intégration le cas échéant après une pondération prédéterminée, si le résultat ainsi réuni dépasse une valeur limite, on crée des impulsions de diminution de pression, et les résultats de l'intégration sont au moins partiellement effacés par l'émission d'une impulsion de diminution de pression.

2. Système de régulation anti-blocage selon la revendication 1, caractérisé en ce que l'accélération de roue et le glissement de roue sont intégrés dans une durée prédéterminée suivant une fenêtre de temps, entraînée, en ce que les deux résultats de l'intégration sont réunis le cas échéant avec une pondération prédéterminée et si le résultat réuni dépasse une valeur limite, on crée des impulsions de diminution de pression et l'émission d'une impulsion de diminution de pression efface au moins partiellement les résultats de l'intégration.

3. Système de régulation anti-blocage selon la revendication 1 ou la revendication 2, caractérisé en ce qu'on influence la valeur limite en fonction de la décélération du véhicule et/ou de la vitesse du véhicule.

Fig.1

Fig.2

zum
E und A-Ventil

zum E-Ventil

$Sch_{Aufbau}$

$Sch'_{Abbau}$

zusammenget.
Integrationsinhalt

a)

$t_1$    $t_2$    $t_3$   $t_4$      $t_5$

b)       Abbauimpuls

FIG.3   c)   Aufbauimpuls

$Sch_{Aufbau}$

$Sch_{Abbau}$

Aufbauimpuls

FIG.4       Abbauimpuls

v

$v_R$     $v_F$

FIG.5